# FASCICULE DE BREVET EUROPEEN

(11) **EP 1 281 016 B1**
(45) Date de publication et mention de la délivrance du brevet: **28.06.2006**
(21) Numéro de dépôt: 01931777.5
(22) Date de dépôt: 02.05.2001
(51) Int. Cl.: F16K 31/08

(54) **VANNE A COMMANDE MAGNETIQUE**
MAGNETISCH STEUERBARES VENTIL
MAGNETICALLY CONTROLLED VALVE

(30) Priorité: 05.05.2000 FR 0005844
(43) Date de publication de la demande: 05.02.2003
(73) Titulaire: SIDEL, 76053 Le Havre Cedex (FR)
(72) Inventeur: Sabiron, Gérard, 76053 Le Havre Cedex (FR); Feuilloley, Guy, F-76053 Le Havre Cedex (FR)
(74) Mandataire: Siloret, Patrick
(86) Numéro de dépôt international: PCT/FR2001/001344
(87) Numéro de publication internationale: WO 2001/086181

(56) Documents cités:
- BE-A- 1 002 481
- FR-A- 1 383 087
- FR-A- 2 206 726
- JP-A- 60 078 180
- JP-A- 61 031 780

## Description

L'invention concerne une vanne pour la commande du débit d'un fluide dans un circuit, du type dans lequel la vanne comporte un corps de vanne qui délimite une chambre de commande dans laquelle un obturateur peut se déplacer axialement sous l'action de moyens de génération de champ magnétique agencés à l'extérieur de la chambre, et du type dans lequel la chambre présente une extrémité avant qui forme un siège contre lequel l'obturateur vient en appui dans une position de fermeture.

Une telle vanne est notamment destinée à être utilisée dans une machine de remplissage car elle permet un nettoyage parfait du circuit de distribution de fluide, ce qui permet d'éviter toute contamination du fluide au cours du remplissage. Bien entendu, une telle vanne se révèle particulièrement avantageuse dans le cas du remplissage de produits alimentaires.

En effet, selon une caractéristique essentielle de ce type de vannes dont on trouve des exemples dans les documents FR-A-2.206.726 et DE-A-1.600.717, l'obturateur est entièrement compris dans la chambre de commande sans être relié par quelque organe que ce soit à l'extérieur du circuit. Ainsi, on garantit un parfait isolement entre l'intérieur et l'extérieur du circuit.

Tel n'est pas le cas des vannes dans lesquelles l'obturateur est déplacé par un actionneur électromagnétique par l'intermédiaire d'une tige de commande. En effet, la tige de commande présente alors une extrémité reliée à l'obturateur qui est à l'intérieur du circuit, et une extrémité reliée à l'actionneur qui est à l'extérieur. Immanquablement, il faut donc prévoir des moyens d'étanchéité autour de la tige, ces moyens ne devant pas empêcher les mouvements de la tige qui commande les déplacements de l'obturateur. Or, ces moyens d'étanchéité sont soumis à l'usure et peuvent devenir un point d'entrée pour des contaminants.

Les vannes dont la position de l'obturateur est commandée par un champ magnétique sont donc particulièrement intéressantes en termes de propreté du circuit de distribution de liquide. Cependant, la plupart de ces vannes sont des vannes de type "tout ou rien ". En effet, le champ magnétique est créé par exemple par un électro-aimant de sorte que l'obturateur ne peut occuper que deux positions suivant que l'électro-aimant est alimenté électriquement ou non.

Or, pour les machines de remplissage, il apparaît qu'il est intéressant de pouvoir disposer de plusieurs débits de fluide, notamment pour pouvoir accélérer le remplissage en dépit du phénomène de création de mousse. En effet, lorsque le débit de remplissage est important, ce qui permet de remplir rapidement un volume donné de produit, on observe immanquablement l'apparition de mousse. Cela se révèle particulièrement gênant en fin de remplissage car la mousse conduit a un débordement du produit, ce qui entraîne non seulement une perte de produit mais surtout une incertitude quant à la quantité de produit qui est effectivement contenue dans le récipient en fin de remplissage. Bien entendu, la formation de mousse est beaucoup moins importante si l'on réduit le débit de remplissage, mais on augmente alors la durée de celui-ci.

Ainsi, il est apparu particulièrement intéressant de remplir le récipient en deux phases. Dans une première phase, on privilégie la rapidité de remplissage en utilisant un gros débit de fluide, sans se soucier du problème de moussage du produit. Dans une seconde phase, on utilise un débit moindre pour permettre à la mousse éventuellement créée au cours de la première phase de se résorber et pour arriver au niveau souhaité de remplissage, soit en termes de poids de produit, soit en termes de volume ou de hauteur de remplissage, avec le plus de précision possible.

Or un tel procédé de remplissage nécessite l'utilisation d'une vanne capable de déterminer au moins deux débits différents. Un tel résultat peut être obtenu en utilisant une vanne proportionnelle. Cependant, les vannes proportionnelles, dans lesquelles on doit maîtriser avec une grande précision la position axiale de l'obturateur dans la chambre de commande, sont relativement complexes et onéreuses, tant dans leur conception propre qu'en ce qui concerne le circuit de commande nécessaire à leur mise en oeuvre.

L'invention a donc pour objet de proposer une nouvelle conception d'une vanne qui permette de déterminer au moins deux débits discrets différents, tout en étant de construction simple et en étant facile à mettre en oeuvre.

Dans ce but, l'invention propose une vanne pour la commande du débit d'un fluide dans un circuit, du type dans lequel la vanne comporte un corps de vanne qui délimite une chambre de commande dans laquelle un obturateur peut se déplacer axialement sous l'action de moyens de génération de champ magnétique agencés à l'extérieur de la chambre, et du type dans lequel la chambre présente une extrémité avant qui forme un siège contre lequel l'obturateur vient en appui dans une position de fermeture, caractérisée en ce que la chambre comporte au moins deux tronçons utiles de sections transversales différentes, en ce que l'obturateur peut occuper, en plus de la position de fermeture, au moins une position reculée dans laquelle il est reçu dans un premier des deux tronçons utiles, et une position intermédiaire dans laquelle il est reçu dans le second des tronçons, de manière à déterminer au moins deux débits différents pour le fluide au travers de la vanne, et en ce que le champ magnétique créé est asymétrique de manière à plaquer transversalement l'obturateur contre une portion de paroi du corps de vanne qui, sur toute la course axiale de l'obturateur dans la chambre, présente une épaisseur sensiblement constante.

Selon d'autres caractéristiques de l'invention :
- les deux tronçons utiles sont sensiblement cylindriques, d'axes sensiblement parallèles, les deux axes étant décalés de manière que les deux tronçons aient une génératrice commune ;
- les deux tronçons utiles sont raccordés l'un à l'autre par un tronçon de raccordement dont la section varie progressivement le long de l'axe ;
- les moyens de génération de champ magnétique peuvent être déplacés axialement le long de la paroi du corps de vanne, l'obturateur suivant les déplacements des moyens de génération de champ ;
- les moyens de génération du champ magnétique comportent des aimants permanents ;
- les moyens de génération du champ magnétique comportent au moins deux sources de champ électromagnétiques qui peuvent être activées indépendamment l'une de l'autre pour maintenir l'obturateur en position reculée et en position intermédiaire ;
- l'obturateur est une bille en matériau ferromagnétique ; et
- le siège de la vanne est constitué par une arête circulaire à angle vif.

D'autres caractéristiques et avantages de l'invention apparaîtront à la lecture de la description détaillée qui suit ainsi que dans les dessins annexés dans lesquels :
- la figure 1 est une vue schématique en perspective d'une vanne conforme aux enseignements de l'invention ;
- la figure 2 est une vue schématique en coupe axiale de la vanne en position d'ouverture ;
- la figure 3 est une vue schématique en coupe transversale de la vanne selon la figure 2 ;
- les figures 4 et 5 sont des vues similaires à celle de la figure 2 illustrant la vanne respectivement en position intermédiaire et en position de fermeture.

La vanne 10 qui est illustrée sur les figures comporte un corps de vanne 12 sensiblement tubulaire d'axe A1. La face externe du corps de vanne est cylindrique d'axe A1 tandis que le volume interne du corps de vanne 12, qui forme une chambre de commande 14 dans laquelle circule le fluide dont on veut réguler le débit, comporte plusieurs tronçons de sections différentes.

Par rapport à un sens préférentiel de circulation du fluide dans la vanne, qui est représenté sur les figures par des flèches, le corps de vanne 12 présente un tronçon amont 16, un tronçon intermédiaire 18 et un tronçon aval 20. La chambre de commande 14 comprend les tronçons amont 16 et intermédiaire 18.

De manière connue, un obturateur 22 est reçu dans la chambre de commande 14 pour réguler le débit de fluide au travers de la vanne 10. L'obturateur 22 est en l'occurrence une bille en acier inoxydable magnétique dont la position axiale dans la chambre de commande 14 est commandée par un dispositif externe 24 qui sera décrit plus en détail par la suite. D'autres formes d'obturateur sont bien entendu possibles mais la forme sphérique de la bille, bien que pénalisante en termes de couplage magnétique, s'avère avantageuse en termes d'étanchéité de la vanne et de facilité de nettoyage.

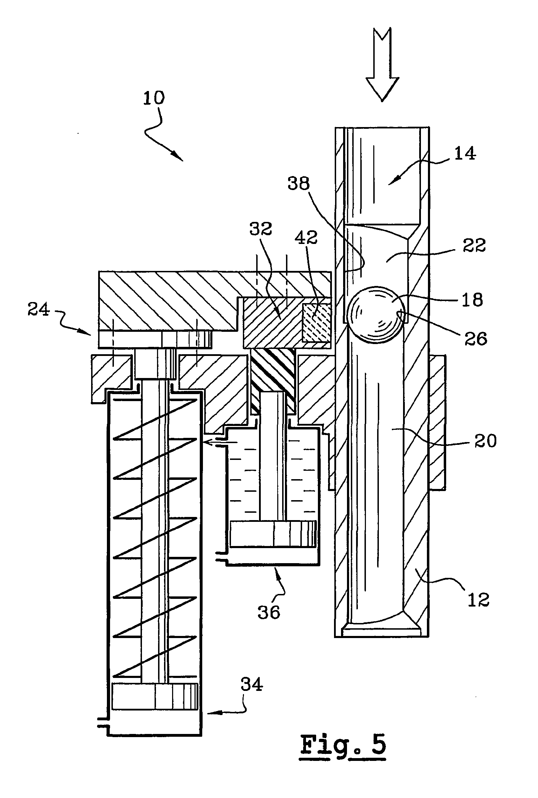

La limite entre le tronçon intermédiaire 18 et le tronçon aval 20 du corps de vanne 12 est déterminée par un siège 26 sur lequel l'obturateur, en l'occurrence la bille 22, vient en appui de manière étanche pour assurer la fermeture de la vanne c'est-à-dire l'interruption complète de la circulation de liquide au travers de la vanne 10 (voir figure 5).

Dans l'exemple illustré, le tronçon intermédiaire 18 et le tronçon aval 20 sont des alésages cylindriques de même axe A2. Les tronçons intermédiaire 18 et aval 20 présentent tous les deux une section circulaire, le diamètre du tronçon intermédiaire 18 étant supérieur à celui du tronçon aval 20 de telle sorte qu'ils délimitent entre eux un rebord annulaire. Il aurait été possible de réaliser ce rebord sous la forme d'un chanfrein conique sur lequel la bille viendrait en appui en position de fermeture. Cependant, dans l'exemple proposé, le diamètre de la bille 22 et la configuration du rebord font que, en position de fermeture tel qu'illustré à la figure 5, la bille 22 vient en appui sur l'arête à angle aigu 26 qui se trouve à l'intersection de la surface du rebord et de la surface latérale du tronçon aval 20. Cette disposition permet de garantir relativement aisément l'étanchéité de la vanne en position de fermeture. Elle permet aussi de conserver cette étanchéité dans le cas où le fluide qui circule dans la vanne est par exemple un liquide alimentaire contenant des pulpes. En effet, dans ce cas, des pulpes sont toujours susceptibles de venir se coincer entre l'obturateur 22 et le siège 26, au risque d'empêcher la fermeture étanche de la vanne. Dans la vanne 10, le siège 26 présente un caractère tranchant de telle sorte qu'un morceau de pulpe qui se trouverait entre la bille 22 et le siège 26 se trouverait découpé grâce à la force d'appui de la bille sur le siège. Ainsi coupé, le morceau de pulpe ne pourra plus entraver l'étanchéité de la vanne.

On notera que la forme du tronçon aval 20 est indifférente pour le fonctionnement de l'obturateur et de son système de commande et qu'elle pourra être adaptée, par exemple pour améliorer les caractéristiques d'écoulement du fluide.

Le tronçon amont 16 de la chambre de commande 14 est lui aussi un cylindre circulaire qui, dans l'exemple proposé, présente le même axe A1 que la surface externe du corps de vanne, sans que cela soit une nécessité.

Selon un premier aspect de l'Invention, les deux tronçons amont 16 et intermédiaire 18 présentent, en section, une taille différente. Le diamètre du tronçon intermédiaire 18 est en l'occurrence inférieur à celui du tronçon amont 16.

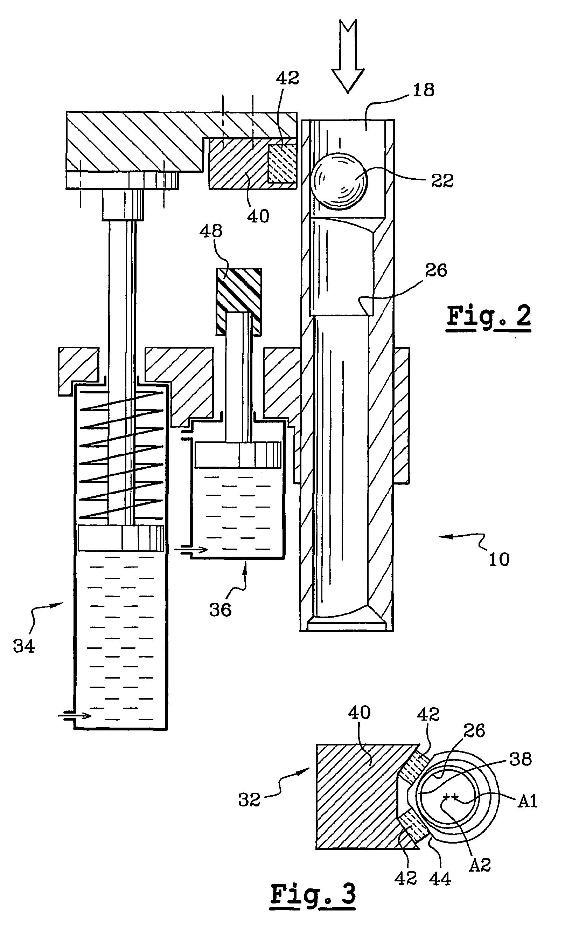

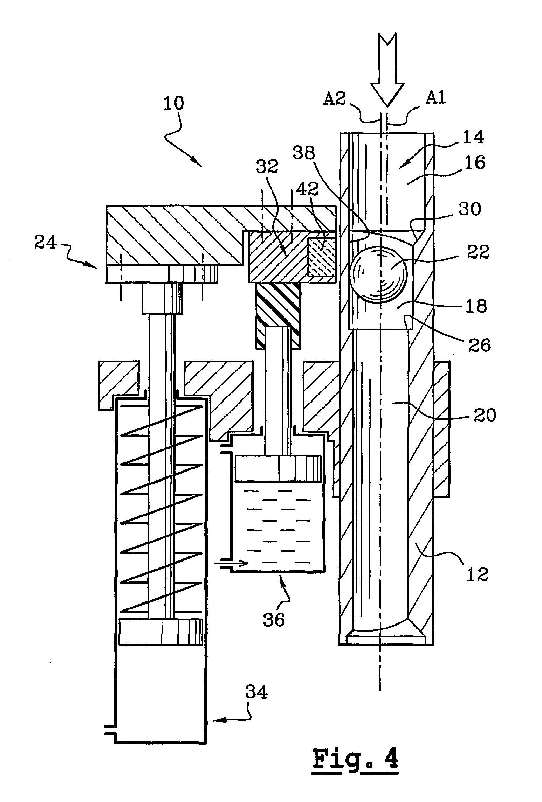

La bille 22 peut être amenée et maintenue par le dispositif de commande 24 soit dans une position de pleine ouverture dans laquelle elle est reçue dans le tronçon amont 16, soit dans une position intermédiaire dans laquelle elle est reçue dans le tronçon intermédiaire 18. En position intermédiaire de la bille 22, on peut voir sur la figure 4 que la section de passage qui reste pour le fluide est réduite par rapport à celle disponible lorsque la bille se trouve en position de pleine ouverture tel quel cela est illustré à la figure 2. De la sorte, en maintenant la bille 22 dans le tronçon amont 16 ou dans le tronçon intermédiaire 18, on détermine deux débits de fluide différents au travers de la vanne.

De préférence, les tronçons amont 16 et intermédiaire 18 sont raccordés l'un à l'autre de manière progressive par un tronçon de raccordement 30 dont la section varie progressivement pour éviter qu'll n'y ait une variation brutale et discontinue de section dans la chambre de commande 14.

Selon un autre aspect de l'invention, la commande de la position axiale de la bille se fait grâce à un dispositif externe 24 qui met en oeuvre un couplage magnétique entre le dispositif externe et l'obturateur.

Dans l'exemple proposé, le dispositif externe utilise un circuit magnétique 32 à aimants permanents qui est susceptible d'être déplacé axialement, par des vérins à pression de fluide 34, 36, entre trois positions illustrées respectivement aux figures 2, 4 et 5. Le circuit magnétique 32 agit au travers du corps de vanne 12, qui est en matériau amagnétique, pour attirer la bille magnétique 22, laquelle suit alors les déplacements axiaux du circuit magnétique.

Selon un aspect de l'invention, le champ magnétique créé par le circuit magnétique 24 est asymétrique de telle sorte que la bille 22 se trouve toujours plaquée transversalement contre une portion de la paroi latérale de la chambre de commande 14. De la sorte, quelle que soit la position axiale de la bille 22, elle se trouve en permanence en appui contre cette portion définie de la paroi latérale de la chambre de commande. Selon l'invention, l'épaisseur de cette portion de paroi latérale est sensiblement constante sur toute la course axiale de la bille 22.

Pour ce faire, on a choisi de réaliser, dans l'exemple illustré, les deux tronçons amont 16 et intermédiaire 18 sous la forme de deux cylindres d'axe A1 et A2 parallèles mais distincts. Le décalage transversal des deux axes A1 et A2 est égal à la différence de rayons des deux tronçons de telle sorte que les deux tronçons cylindriques présentent une génératrice commune 38. En vue de dessus, tels que représentés sur la figure 3, les deux tronçons sont vus sous la forme de deux cercles tangents par l'intérieur. La génératrice commune 38 est alors la droite théorique sur laquelle roule la bille 22 lorsqu'elle est déplacée axialement par le dispositif 24. De la sorte, on évite que la bille ait à franchir une "marche" au passage entre le tronçon amont 16 et le tronçon intermédiaire 18.

Grâce à cette disposition selon l'invention, l'entrefer entre la bille 22 et le circuit à aimants permanents est sensiblement constant, ce qui permet de conserver à coup sûr un couplage magnétique entre la bille et le dispositif de commande 24. Tel ne serait pas le cas si on utilisait un champ magnétique concentrique créé par un aimant annulaire entourant la chambre de commande 14.

En théorie, la portion de paroi d'épaisseur constante se réduit à une simple droite correspondant à la génératrice 38. En pratique, cette portion présentera une certaine largeur, l'assimilant ainsi à une bande de roulement. De même, l'épaisseur de cette portion de paroi pourra présenter une faible variation d'épaisseur, soit sous la forme d'une variation continue, soit sous la forme d'une petite marche. L'essentiel de ce point de vue est que la force d'attraction exercée sur la bille ne s'en trouve pas diminuée de manière significative.

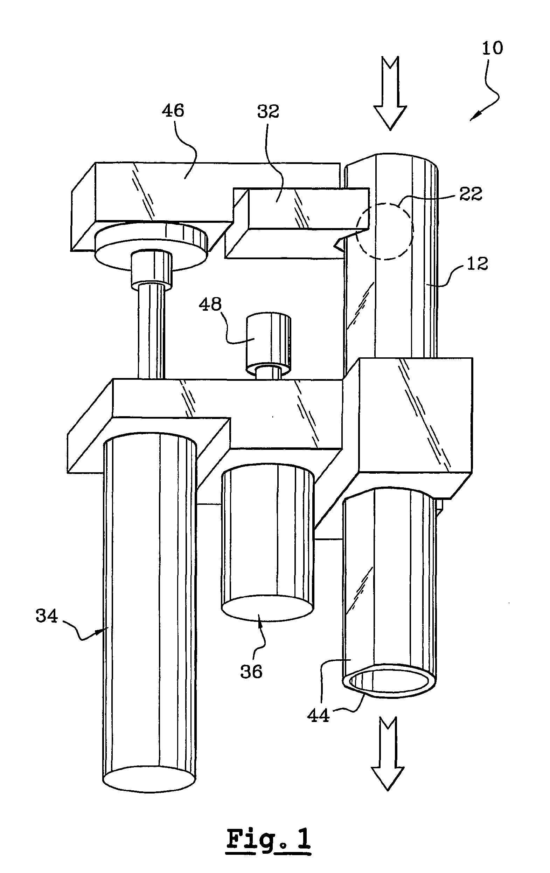

Comme on peut le voir sur la figure 3, le circuit magnétique 32 comporte pour l'essentiel un corps de bouclage magnétique 40 qui porte deux séries d'aimants 42 orientés de manière que, à l'extérieur du circuit magnétique, les lignes de flux magnétique convergent sensiblement vers le centre de la chambre de commande 14 pour obtenir le meilleur couplage possible avec la bille 22. Comme on le voit aussi sur la figure 1 , le corps de vanne 12 présente sur sa surface externe deux méplats 44 qui s'étendent axialement le long de la trajectoire des aimants 42 pour diminuer encore l'épaisseur de la paroi. De préférence, les aimants 42 ne frottent pas sur les méplats 44. Bien entendu, les méplats 44 et les aimants 42 sont situés en correspondance avec la portion de paroi d'épaisseur constante 38.

Le circuit magnétique 32 est monté sur une platine 46 qui est solidaire de la tige du vérin principal 34, lequel est agencé parallèlement au corps de vanne 12. Le vérin principal est un vérin pneumatique "simple effet" dont la tige est rappelée par un ressort interne vers une position de repos correspondant à la position de fermeture de la vanne. En position d'élongation maximale tel qu'illustrée à la figure 2, la tige du vérin principal 34 amène le circuit magnétique jusqu'à une position correspondant à la plein ouverture de la vanne, c'est-à-dire une position telle que la bille soit reçue dans le tronçon amont 16 de la chambre de commande 14, c'est-à-dire le tronçon de plus grand diamètre.

Le vérin auxiliaire 36 permet d'amener un tampon de butée 48 jusqu'à une position saillante dans laquelle il est susceptible d'empêcher le retour du circuit magnétique vers la position de fermeture. En effet, le vérin secondaire 36 est agencé en parallèle au vérin principal 34 et, en position saillante du tampon de butée 48, le circuit magnétique 32 vient en appui, sensiblement à mi-course, sur le tampon 48 lorsque le ressort du vérin principal 34 ramène la platine 46 en position de fermeture comme cela est illustré sur la figure 4. Ainsi, la bille 22, qui suit les déplacements du circuit magnétique 32, se trouve alors maintenue à l'intérieur du tronçon intermédiaire 18 de la chambre 14. Lorsque le vérin secondaire est commandé vers sa position de repos tel qu'illustré à la figure 5, le ressort du vérin principal peut alors ramener le circuit magnétique vers une position telle que la bille 22 se trouve plaquée contre son siège 26 pour assurer la fermeture de la vanne 10.

Dans l'exemple illustré, le vérin auxiliaire 36 est un vérin de type "double effet". Ceci permet notamment de ramener très rapidement le tampon de butée 48 vers sa position escamotée dans laquelle il permet la fermeture de la vanne en partant de la position intermédiaire.

L'utilisation d'un vérin principal à simple effet permet notamment de garantir que, en cas de défaillance du système, la vanne soit automatiquement ramenée en position de fermeture. Toutefois, dans certaines applications qui nécessitent des temps de fermeture très court, on pourra utiliser un vérin principal de type "double effet".

Le mode de réalisation de l'invention qui vient d'être décrit n'est qu'un exemple non limitatif. En effet, on pourra prévoir d'autres dispositions constructives, notamment pour la réalisation du dispositif de commande 24. En effet, on pourrait prévoir d'utiliser d'autre types d'actionneurs pour assurer les déplacements du circuit magnétique. On pourrait aussi prévoir de remplacer le circuit magnétique à aimants permanents par un circuit magnétique à electroaimants, en conservant le principe de couplage magnétique permanent ainsi que le système de déplacement du circuit magnétique.

Toutefois, ce dispositif de commande pourrait encore être remplacé par un système comportant plusieurs électro-aimants disposés de manière à pouvoir attirer et maintenir la bille dans les différentes positions axiales requises dans la chambre de commande. Les différents électroaimants seraient alors alimentés alternativement pour commander les différents modes de fonctionnement de la vanne 10.

Dans l'exemple de réalisation illustré, la vanne est représentée dans une position verticale, le fluide circulant du haut vers le bas dans la chambre de commande, de telle sorte que la bille tend à être plaquée contre son siège par la pression du fluide. Avec cette disposition, le circuit de commande pourrait être prévu pour laisser la bille libre en position de repos. Toutefois, le fait de prévoir un maintien positif de la bille contre son siège par couplage magnétique permet d'utiliser la vanne dans une autre orientation spatiale ou avec un sens inverse de circulation du fluide dans la vanne 10.

Dans tous les cas, la vanne selon l'invention est commandée en "tout ou rien", ce qui simplifie considérablement les circuits de commande à mettre en oeuvre, tout en garantissant une très bonne précision des débits de fluide. En effet, pour une pression de fluide donnée, les deux débits au travers de la vanne sont déterminés par la section de passage résiduelle que laisse subsister la bille lorsqu'elle est maintenue dans l'un des deux tronçons amont ou intermédiaire. On notera que ces tronçons sont de préférence cylindriques de manière à présenter une section constante sur une certaine longueur axiale. Ainsi, tant que la bille est contenue dans ce tronçon, la section de passage reste constante, indépendamment d'une relative imprécision quant à la position exacte de la bille dans le tronçon.

Bien entendu, l'homme du métier pourra sans difficulté dédulre de la présente description une variante d'exécution de l'invention pour réaliser une vanne permettant de déterminer plus de deux débits discrets différents. Il lui suffira en effet de prévoir, en amont du siège, autant de tronçons utiles de section différentes qu'il veut pouvoir commander de débits discrets.

## Revendications

1. Vanne pour la commande du débit d'un fluide dans un circuit, du type dans lequel la vanne (10) comporte un corps de vanne (12) qui délimite une chambre de commande (14) dans laquelle un obturateur (22) peut se déplacer axialement sous l'action de moyens de génération de champ magnétique (32) agencés à l'extérieur de la chambre (14), et du type dans lequel la chambre (14) présente une extrémité avant qui forme un siège (26) contre lequel l'obturateur (22) vient en appui dans une position de fermeture,
**caractérisée en ce que** la chambre (14) comporte au moins deux tronçons utiles (16, 18) de sections transversales différentes, **en ce que** l'obturateur (22) peut occuper, en plus de la position de fermeture, au moins une position reculée dans laquelle il est reçu dans un premier (16) des deux tronçons utiles, et une position intermédiaire dans laquelle il est reçu dans le second (18) des tronçons, de manière à déterminer au moins deux débits différents pour le fluide au travers de la vanne (10), et **en ce que** le champ magnétique créé est asymétrique de manière à plaquer transversalement l'obturateur (22) contre une portion (38) de paroi du corps de vanne (12) qui, sur toute la course axiale de l'obturateur dans la chambre, présente une épaisseur sensiblement constante.

2. Vanne selon la revendication 1, **caractérisée en ce que** les deux tronçons utiles (16, 18) sont sensiblement cylindriques, d'axes (A1, A2) sensiblement parallèles, les deux axes étant décalés de manière que les deux tronçons aient une génératrice commune (38).

3. Vanne selon l'une des revendications 1 ou 2, **caractérisée en ce que** les deux tronçons utiles (16, 18) sont raccordés l'un à l'autre par un tronçon de raccordement (30) dont la section varie progressivement le long de l'axe.

4. Vanne selon l'une quelconque des revendications précédentes, **caractérisée en ce que** les moyens de génération de champ magnétique (32) peuvent être déplacés axialement le long de la paroi du corps de vanne (12), l'obturateur (22) suivant les déplacements des moyens de génération de champs.

5. Vanne selon l'une quelconque des revendications précédentes, **caractérisée en ce que** les moyens de génération du champ magnétique (32) comportent des aimants permanents (42).

6. Vanne selon l'une quelconque des revendications 1 à 3, **caractérisée en ce que** les moyens de génération du champ magnétique comportent au moins deux sources de champ électromagnétiques qui peuvent être activées indépendamment l'une de l'autre pour maintenir l'obturateur (22) en position reculée et en position intermédiaire.

7. Vanne selon l'une quelconque des revendications précédentes, **caractérisée en ce que** l'obturateur est une bille en matériau ferromagnétique.

8. Vanne selon l'une quelconque des revendications précédentes, **caractérisée en ce que** le siège de la vanne est constitué par une arête circulaire à angle vif (26).

## Claims

1. Valve for controlling the flow rate of a fluid in a circuit, of the type in which the valve (10) has a valve body (12) which delimits a control chamber (14) in which a closure element (22) can move axially under the action of magnetic field generation means (32) placed outside the chamber (14), and of the type in which the chamber (14) has a front end forming a seat (26) against which the closure element (22) rests in a closed position,
**characterized in that** the chamber (14) comprises at least two working sections (16, 18) with different cross-sections, **in that** the closure element (22) can take up, besides the closed position, at least a retracted position in which it is housed in a first (16) of the two working sections, and an intermediate position in which it is housed in the second (18) of the sections, so as to determine at least two different flow rates for the fluid through the valve (10), and **in that** the magnetic field generated is asymmetrical so as to press the closure element (22) transversely against a wall portion (38) of the valve body (12) which, over the entire axial travel of the closure element in the chamber, has a substantially constant thickness.

2. Valve according to Claim 1, **characterized in that** the two working sections (16, 18) are substantially cylindrical, of substantially parallel axes (A1, A2), the two axes being offset in such a way that the two sections have a common generatrix (38).

3. Valve according to one of Claims 1 or 2, **characterized in that** the two working sections (16, 18) are connected to one another by a connecting section (30) whose cross-section varies gradually along the axis.

4. Valve according to any one of the preceding claims, **characterized in that** the magnetic field generation means (32) may be moved axially along the wall of the valve body (12), the closure element (22) following the movements of the field generation means.

5. Valve according to any one of the preceding claims, **characterized in that** the magnetic field generation means (32) comprise permanent magnets (42).

6. Valve according to any one of Claims 1 to 3, **characterized in that** the magnetic field generation means comprise at least two electromagnetic field sources which may be activated independently of one another so as to keep the closure element (22) in the retracted position and in the intermediate position.

7. Valve according to any one of the preceding claims, **characterized in that** the closure element is a ball made of ferromagnetic material.

8. Valve according to any one of the preceding claims, **characterized in that** the valve seat consists of a circular edge of acute angle (26).

## Patentansprüche

1. Ventil zur Steuerung des Durchflusses eines Fluids in einem Kreislauf, jener Art, bei der das Ventil (10) einen Ventilkörper (12) aufweist, der eine Steuerkammer (14) begrenzt, in der sich ein Verschluss (22) unter der Wirkung von außerhalb der Kammer (14) angeordneten Mitteln (32) zur Erzeugung eines Magnetfelds axial verschieben kann, und jener Art, bei der die Kammer (14) ein Vorderende aufweist, das einen Sitz (26) bildet, an den der Verschluss (22) in einer Schließstellung zur Anlage kommt,
**dadurch gekennzeichnet, dass** die Kammer (14) mindestens zwei Nutzabschnitte (16, 18) mit verschiedenen Querschnitten aufweist, der Verschluss (22) zusätzlich zur Schließstellung mindestens eine zurückgezogene Stellung, in der er in einem ersten (16) der beiden Nutzabschnitte aufgenommen wird, und eine Zwischenstellung, in der er in dem zweiten (18) der Abschnitte aufgenommen wird, einnehmen kann, um mindestens zwei verschiedene Durchflüsse für das Fluid durch das Ventil (10) zu bestimmen, und dass das erzeugte Magnetfeld asymmetrisch ist, um den Verschluss (22) quer an einen Teil (38) der Wand des Ventilkörpers (12) zu drücken, der über den ganzen Axialhub des Verschlusses in der Kammer eine im Wesentlichen konstante Dicke aufweist.

2. Ventil nach Anspruch 1, **dadurch gekennzeichnet, dass** die beiden Nutzabschnitte (16, 18) im Wesentlichen zylindrisch sind und im Wesentlichen parallele Achsen (A1, A2) aufweisen, wobei die beiden Achsen so versetzt sind, dass die beiden Abschnitte eine gemeinsame Erzeugende (38) aufweisen.

3. Ventil nach Anspruch 1 oder 2, **dadurch gekennzeichnet, dass** die beiden Nutzabschnitte (16, 18) durch einen Verbindungsabschnitt (30) miteinander verbunden sind, dessen Querschnitt sich entlang der Achse allmählich ändert.

4. Ventil nach einem der vorhergehenden Ansprüche, **dadurch gekennzeichnet, dass** die Mittel (32) zur Erzeugung eines Magnetfeldes axial entlang der Wand des Ventilkörpers (12) verschoben werden können, wobei der Verschluss (22) den Verschiebungen der Felderzeugungsmittel folgt.

5. Ventil nach einem der vorhergehenden Ansprüche, **dadurch gekennzeichnet, dass** die Mittel (32) zur Erzeugung des Magnetfeldes Dauermagneten (42) umfassen.

6. Ventil nach einem der Ansprüchen 1 bis 3, **dadurch gekennzeichnet, dass** die Mittel zur Erzeugung eines Magnetfeldes mindestes zwei Elektromagnetfeldquellen aufweisen, die unabhängig voneinander aktiviert werden können, um den Verschluss (22) in zurückgezogener Stellung und in Zwischenstellung zu halten.

7. Ventil nach einem der vorhergehenden Ansprüche, **dadurch gekennzeichnet, dass** der Verschluss eine Kugel aus ferromagnetischem Material ist.

8. Ventil nach einem der vorhergehenden Ansprüche, **dadurch gekennzeichnet, dass** der Sitz des Ventils durch eine kreisförmige Kante mit scharfem Winkel (26) gebildet wird.
